# EUROPÄISCHE PATENTSCHRIFT

(11) **EP 4 016 041 B1**
(45) Veröffentlichungstag und Bekanntmachung des Hinweises auf die Patenterteilung: **21.08.2024**
(21) Anmeldenummer: 21215470.2
(22) Anmeldetag: 17.12.2021
(51) Int. Cl.: G01N 1/22

(54) **VORRICHTUNG SOWIE VERFAHREN ZUM NACHWEIS VON SCHIMMEL IN RAUMLUFT MIT EINEM TRÄGER**
DEVICE AND METHOD FOR DETECTING MOULD IN INDOOR AIR INCLUDING A SUPPORT
DISPOSITIF, AINSI QUE PROCÉDÉ DE DÉTECTION DE LA MOISISSURE DANS L'AIR AMBIANT À L'AIDE D'UN SUBSTRAT

(30) Priorität: 17.12.2020 DE 102020133992
(43) Veröffentlichungstag der Anmeldung: 22.06.2022
(73) Patentinhaber: Albert-Ludwigs-Universität Freiburg, 79098 Freiburg (DE)
(72) Erfinder: Schmitt, Dr. Katrin, 79098 Freiburg (DE)
(74) Vertreter: Rösler, Uwe

(56) Entgegenhaltungen:
- WO-A1-2016/064934
- DE-A1- 102015 114 956
- DE-A1- 102019 220 583
- US-A1- 2019 293 539

## Beschreibung

### Technisches Gebiet

Die Erfindung bezieht sich auf eine Vorrichtung sowie ein Verfahren zum Nachweis von Schimmel in Raumluft mit einem Träger, der eine für die Raumluft zugängliche Trägeroberfläche besitzt, auf der wenigstens ein das Wachstum von Schimmel begünstigendes Nährmedium in Art eines Filmes aufgebracht ist. Mit einer Messanordnung, die wenigstens eine Lichtquelle und wenigstens einen Lichtdetektor umfasst, wird an dem oder durch das auf der Trägeroberfläche aufgebrachte Nährmedium eine Transmissionsmessung vorgenommen. Die vom Lichtdetektor herrührenden Sensorsignale werden einer Auswerteinheit zugeführt, in der die Signale unter Zugrundelegung eines Entscheidungskriteriums ausgewertet werden und ein Signal erzeugt wird, so dass der Träger vermittels der Fördereinheit um eine vorgegebene Wegstrecke gefördert wird.

### Stand der Technik

In den letzten Jahren sind mögliche negative gesundheitliche Beeinträchtigungen durch Schimmel und Schimmelmetaboliten in Innenräumen zunehmend ins öffentliche Bewusstsein gerückt. Schimmel und seine Metaboliten werden als Hauptverursacher der Luftverschmutzung in Innenräumen angesehen. Abhängig von der Schimmelpilzart enthalten ihre Sporen in der Luft mehr oder weniger toxische Substanzen, die als Mykotoxine bezeichnet werden und zu allergischen Reaktionen, Atemproblemen oder Kopfschmerzen und Müdigkeit führen. Seit vielen Jahrzehnten werden Mykotoxine aus landwirtschaftlichen Gebieten oder Mülldeponien als Schadstoffe eingestuft. Zu den sekundären Schimmelpilzmetaboliten gehören neben Mykotoxinen auch flüchtige organische Verbindungen mikrobiellen Ursprungs (MVOC), darunter Alkohole, Ketone oder schwefelhaltige Verbindungen. Neben der Gefahr gesundheitlicher Beeinträchtigungen bei den Bewohnern kann Schimmelbefall zu strukturellen Schäden an den Gebäuden oder dem Inventar führen.

Bekannte Maßnahmen zur Ermittlung von Schimmelbefall in Innenräumen stellen die nachfolgenden Probeentnahmetechniken dar.
- Tape-Lift Probenahme: Pilzsporen / -hyphen werden mit einem Klebeband von einer kontaminierten Oberfläche entnommen, anschließend unter Laborbedingungen kultiviert und mittels Lichtmikroskopie bewertet.
- Probenahme auf Agar: Eine Agarplatte wird gegen verdächtige bzw. kontaminierte Oberflächen gedrückt. Eine nachfolgende Kultivierung und Auswertung erfolgt mittels Licht- / Stereomikroskopie im Labor.
- Sedimentationsplatte: Die Probenahme von Partikeln aus der Luft erfolgt auf einer offenen Petrischale, bspw. mit ca. einer Stunde Probenentnahmezeit. Die Auswertung erfolgt im Labor.
- Materialproben: Direkte Untersuchung von verdächtigen bzw. kontaminierten Materialproben wie Farbe, Tapete, Holzmöbeln, Gips, Gipskarton, Dämmstoffen, Erde etc. Die Materialprobe wird entweder zerkleinert und lichtmikroskopisch untersucht oder es wird eine Konzentrationsreihe zur Kultivierung auf Agarplatten hergestellt. Anschließend wird die Anzahl der koloniebildenden Einheiten (KBE) bestimmt.
- Hausstaubprobenahme: Vorbereitungsmaßnahme erforderlich, d.h. mehrere Tage keine Reinigung in verdächtigen Räumen, danach Reinigen mit einem neuen Staubsaugerbeutel zur Probenentnahme von mindestens 1 g Staub und Senden der Probe an das Labor. Im Labor Vorbereitung von Konzentrationsreihen und Bestimmung der KBE durch immunochemische Verfahren (z. B. ELISA (enzymelinked immunosorbent assay).
- Luftprobenahme mittels Impaktor, der Luftproben auf speziellen Nährstoffen (z. B. DG18-Agar, Malzextrakt) sammelt. Nach 7 bis 10 Tagen Kultivierung und wird die KBE bestimmt.
- Partikelprobenahme: Partikel aus der Luft werden über Partikelsammeleinheiten auf Objektträgern abgelagert. Die Bewertung erfolgt nach Färbung mit mikroskopischen Methoden. Lebende und tote Sporen werden erfasst.
- MVOC-Test: Vorkonzentration auf Probenröhrchen auf Tenax- oder Kohlenstoffbasis, Desorption / Elution, Analyse mittels Gaschromatographie i.V.m. Massenspektrometrie

Allen bekannten Probeentnahmetechniken haftet der Nachteil eines hohen Aufwandes, hoher Kosten und einer langen Zeitdauer bis ein Messergebnis vorliegt an, um eine Aussage über einen tatsächlichen Schimmelpilzbefall anstellen zu können.

Ferner gehen aus der Druckschrift DE 10 2010 047 465 A1 ein Verfahren sowie eine Messvorrichtung zur Schimmelpilzdetektion hervor, bei dem ein Zeolith-Substrat der Raumluft ausgesetzt wird, dessen Substratoberfläche einer optischen Reflexionsmessung oder elektrischen Leitfähigkeits- und/oder Impedanzmessung unterzogen wird. Eine sich im Laufe der Zeit einstellende Messwertänderung dient im Vergleich mit einem Referenzwert als ein Bestimmungsmaß für den Besatz der Substratoberfläche mit Schimmelpilzsporen.

Aus der Druckschrift DE 101 48 750 B4 sind eine Vorrichtung sowie ein Verfahren zur Detektion von Schimmelpilzbefall auf der Oberfläche eines Nährmediums zu entnehmen, dessen optische Reflexions- oder Transmissions-Eigenschaften mit Hilfe wenigstens einer Lichtquelle sowie eines Lichtdetektors erfassbar sind. Die sich mit der Zeit am oder im Nährmedium einstellenden und detektierbaren Änderungen in den optischen Eigenschaften dienen zur Feststellung von Schimmelpilzbefall oder Schimmelpilzgefährdung an oder in Gebäuden sowie zur Detektion von Schimmelpilzsporen in der Raumluft.

Die Druckschrift DE 10 2019 220 583 A1 offenbart eine Schimmel-Erfassungsvorrichtung, die ein auf einem bandartigen Trägermaterial aufgebrachtes Substrat vorsieht, das für Schimmelwachstum dient und dessen Farbänderung messtechnisch erfasst wird. Das bandförmige Trägersubstrat wird von einer Bevorratungsrolle in den Bereich einer Wachstumskammer gefördert, dort vermessen und im Anschluss auf eine Aufwickelrolle aufgewickelt.

Die Druckschrift US 3,788,951 offenbart ein Verfahren zum Züchten von Monokulturen auf einem länglichen Streifen aus Nährmedium sowie eine entsprechende Vorrichtung zur Durchführung des Verfahrens. Zudem wird die Herstellung eines aus einem Nährmedium bestehenden Bandes erläutert, das in einer Herstellungsvariante zwischen einem Profilband und einer Deckfolie gefasst wird. Zum Zwecke eines kontrollierten Beimpfens des aus einem Nährstoffmaterial bestehenden Bandes wird die Deckfolie vom Nährstoffband über eine Rolle separiert. An der Innenseite der separierten Deckfolie werden über einen motorisch angetriebenen Tupfer Mikroorganismen an der Folie abgeschieden. Zum Zwecke des Beimpfens des Nährstoffbandes wird die Folie zur Oberflächenkontaktierung mit dem Nährmedium zurückgeführt, wobei eine Andrückvorrichtung für einen innigen Kontakt zwischen Folie und Nährmedium sorgt.

Die Druckschrift US 3 788 951 A offenbart eine Luftproben-Sammelvorrichtung, mit der es möglich ist, portionierbare Luftproben vor Ort zu erfassen, die nachträglich, d. h. laborseitig mit gängigen Methoden zur Luftuntersuchung analysiert werden.

### Darstellung der Erfindung

Der Erfindung liegt die Aufgabe zugrunde, eine Vorrichtung sowie ein Verfahren zum Nachweis von Schimmel in Raumluft mit einem Träger, der eine für die Raumluft zugängliche Trägeroberfläche besitzt, auf der wenigstens ein das Wachstum von Schimmel begünstigendes Nährmedium in Art eines Filmes aufgebracht ist, einer Messanordnung mit wenigstens einer Lichtquelle und wenigstens einem Lichtdetektor zur Transmissionsmessung an dem oder durch das auf der Trägeroberfläche aufgebrachte Nährmedium sowie einer mit dem Lichtdetektor verbundenen Auswerteeinheit, die unter Zugrundelegung eines vom Lichtdetektor herrührenden Sensorsignals sowie eines Entscheidungskriteriums ein Signal erzeugt, so dass der Träger vermittels der Fördereinheit um eine vorgegebene Wegstrecke gefördert wird, dadurch weiterzuentwickeln, dass ein kontinuierlicher Nachweis von Schimmel in der Umgebungsluft möglich wird. Überdies soll die lösungsgemäße Vorrichtung kostengünstig realisierbar sein, eine schnelle, d.h. unverzügliche Information über den aktuellen Schimmelpilzbefall liefern und insbesondere die Möglichkeit eröffnen, in einem möglichst autarken Messbetrieb einen möglichst lang andauernden Messeinsatz, von mehreren Wochen, Monaten bis hin zu Jahren zu gewährleisten ohne dabei wartungstechnische Maßnahmen an der Vorrichtung selbst vornehmen zu müssen.

Die Lösung der der Erfindung zugrunde liegenden Aufgabe ist im Anspruch 1 angegeben. Gegenstand des Anspruches 13 ist ein lösungsgemäßes Verfahren zum Nachweis von Schimmel in der Raumluft. Den Erfindungsgedanken vorteilhaft weiterbildende Merkmale sind Gegenstand der Unteransprüche sowie der Beschreibung unter Bezugnahme auf die Ausführungsbeispiele zu entnehmen.

Die erfindungsgemäße Vorrichtung zum Nachweis von Schimmel in der Raumluft gemäß den Merkmalen des Oberbegriffes des Anspruches 1 zeichnet sich dadurch aus, dass auf der Trägeroberseite das in Art eines Filmes ausgebildete Nährmedium aufgebracht ist. Zum Schutz vor Degradation ist auf dem Nährmedium ein Schutzfilm in Art einer Folie aufgebracht, die das Nährmedium gegenüber der Umgebungsluft, vorzugsweise feuchtigkeits- und/oder luftdicht gemeinsam mit dem Träger einschließt.

Ferner ist eine Fördereinheit vorgesehen, die den Träger längs einer Förderstrecke zu fördern vermag, längs der die optische Messanordnung angebracht ist. Zudem ist eine Separiereinheit vorgesehen, die die Schutzfolie vor der Messanordnung längs der Förderstrecke vom Nährmedium separiert, sobald die Fördereinheit den Träger in Förderrichtung fördert.

In einer bevorzugten Ausführungsform ist der Träger als bandförmige Meterware ausgebildet. Die Vorrichtung verfügt durch den als Meterware vorliegenden Träger, auf dem ein Nährmedium in Art eines Filmes aufgebracht ist, über ein großes Reservoir an bevorratetem Nährmedium, das gegenüber atmosphärischen äußeren Einflüssen zwischen dem bandförmig ausgebildeten Träger und der auf dem Nährmedium befindlichen Schutzfolie geschützt ist. Zu Messzwecken ist lediglich ein vergleichsweise kurzer Messbereich bzw. Trägerbandabschnitt erforderlich, längs dem das Nährmedium von der Schutzfolie befreit und der Umgebungsluft frei zugänglich exponiert ist. In diesem Messbereich sind zur Durchführung einer optischen Transmissionsmessung durch das auf dem Träger schichtförmig aufgebrachte Nährmedium wenigstens eine Lichtquelle sowie wenigstens ein Lichtdetektor angeordnet. Der bandförmige Träger ist aus einem lichttransparenten Trägermaterial gefertigt, um eine optische Transmissionsmessung durch den Träger hindurch durchführen zu können.

Die wenigstens eine Lichtquelle ist vorzugweise als Weisslicht-LED ausgeführt. Die wenigstens eine Lichtquelle oder eine weitere Lichtquelle kann ebenso als UV-Lichtquelle ausgeführt sein, um durch Bestrahlung des Nährmediums von kurzwelligen Licht bei den am Nährmedium anhaftenden Schimmelsporen Fluoreszenzlicht anzuregen, das mit einem geeigneten Detektor nachgewiesen werden kann.

Zur Messdurchführung verbleibt das der Raumluft gegenüber freigelegte Nährmedium für eine bestimmt vorgebbare Messdauer stationär, d.h. der Träger verbleibt in Ruhe und wird von der Fördereinheit nicht bewegt. Die wenigstens eine Lichtquelle sowie der wenigstens eine Lichtdetektor sind gegenüberliegend zum Träger und dem darauf befindlichen Nährmedium angeordnet, um auf diese Weise eine Transmissionsmessung am Nährmedium vornehmen zu können.

Die Messdurchführung erfolgt kontrolliert auf Basis einer Steuereinheit, die mit der Fördereinheit sowie der optischen Messanordnung in Verbindung steht und dafür sorgt, dass optische Transmissionsmessungen an dem der Umgebungsluft exponierten Nährmedium innerhalb des Messbereich in zeitlich vorgegebenen bzw. definierten Abständen vorgenommen werden. Beispielsweise wird das Nährmedium im Messbereich der Umgebungsluft 24 Stunden exponiert, bevor die Fördereinheit den Träger samt Nährmedium weiter fördert, um auf diese Weise frisches, d.h. unverbrauchtes Nährmedium durch Separierung von Schutzfolie in den Messbereich nachzufördern.

Für die Durchführung der optischen Messung sind grundsätzlich beliebige Messmodi denkbar, beispielsweise ein zeitlich getakteter Messbetrieb, bei dem beispielsweise jede Stunde eine optische Transmissionsmessung vorgenommen wird. Die zeitlichen Abstände können vorgebbar variieren oder in Abhängigkeit von den aktuellen Messergebnissen individuell, bspw. mittels KI-Auswertung, verändert werden. Auch können die Messungen kontinuierlich durchgeführt werden, sofern die elektrische Energieversorgung kein limitierendes Kriterium ist, bspw. bei Anschluss der Messvorrichtung einen elektrischen Hausanschluss.

Der zeitliche Abstand zwischen zwei am ruhenden Nährmedium durchzuführenden optischen Messungen sowie auch die zeitliche Dauer der Expositionszeit, mit der das durch die Schutzhülle separierte Nährmedium der Umgebungsluft für die Durchführung der optischen Messungen ausgesetzt wird, ist über die Steuereinheit einstellbar, die kabelgebunden oder kabellos zumindest mit der optischen Messanordnung sowie der Fördereinheit verbunden ist.

Die mit Hilfe des wenigstens einen Lichtdetektors gewonnenen Sensorsignale werden der Auswerteeinheit zugeführt, mit der unter Zugrundelegung eines Auswertealgorithmus die Schimmelkonzentrationen der Raumluft bestimmt wird. Auch die Auswerteeinheit kann kabelgebunden mit dem wenigstens einen Lichtdetektor verbunden sein, gleichfalls ist es möglich, die mit Hilfe des wenigstens einen Lichtdetektors gewonnenen Messsignale über eine Kommunikationseinheit kabellos an die Auswerteeinheit, die separat, d.h. extern zur Messvorrichtung angeordnet ist, zu übertragen. So kann die Auswerteinheit als Softwaretool auf einem Endgerät, bspw. einem Smartphone o.ä. mit einem ausführbaren Programm, d.h. APP, realisiert sein.

Zur Bevorratung des vorzugsweise bandförmigen Trägers, auf dem das durch eine Schutzfolie vor Umgebungseinflüssen geschützte Nährmedium aufgebracht ist, dient eine Reservoir-Spule, um die der Träger spiralförmig aufgewickelt ist. Das von der Reservoir-Spule abführende Ende des bandförmigen Trägers ist mit einer zur Reservoir-Spule beabstandet angeordneten Aufnahmespule verbunden, auf die der Träger nach Abwicklung von der Reservoir-Spule sowie nach Messdurchführung am Nährmedium im Messbereich, der sich zwischen der Reservoir- und Aufnahmespule erstreckt, aufgewickelt wird.

Zur kontrollierten Ab- und Aufwicklung des Trägers zwischen beiden Spulen ist wenigstens eine der beiden Spulen elektromotorisch angetrieben. Die vorstehend erläuterte Steuereinheit steuert bzw. aktiviert den Elektromotor sowie die optische Messanordnung taktweise aufeinander abgestimmt.

In Förderrichtung des Trägers vor dem Messbereich und unmittelbar nach der Abwicklung des Trägers von der Reservoir-Spule sorgt eine Separiereinheit für eine für das Nährmedium schonende Abtrennung der Schutzfolie vom Nährmedium, ohne dabei das Nährmedium in seiner Konsistenz und Anordnung auf dem Träger zu beeinträchtigen. In einer bevorzugten Ausführungsform weist die Separiereinheit eine Wickelspule auf, die mit der Schutzfolie zu deren Separierung und Aufwicklung verbunden ist. Selbstverständlich sind alternativ oder in Kombination auch andersartig ausgebildete Separiereinheiten denkbar, wie beispielsweise ein keil- oder klingenförmig ausgebildetes Separiermittel, das die Schutzfolie von der Oberfläche des Nährmediums zu trennen vermag.

In einer bevorzugten Ausführungsform ist für einen verbesserten Luftaustausch am Ort des frei liegenden Nährmediums mit der Umgebungsluft eine Einheit zur Luftansaugung vorgesehen, die Umgebungsluft auf das von der Schutzfolie separierte Nährmedium richtet.

Um die bevorzugt ausgebildete Messvorrichtung möglichst kompakt und vielerorts einsetzbar zu gestalten, sind wenigstens der auf der Reservoir-Spule gewickelte und mit der Aufnahmespule verbundene Träger samt Nährmedium und Schutzfolie, die Fördereinheit, die optische Messanordnung, die Auswerteeinheit sowie auch die Separiereinheit sowie auch optional die vorstehend genannte Einheit zur Luftansaugung in einem Gehäuse angebracht, das zur Befestigung an beliebigen technischen Oberflächen, wie beispielsweise Wand- oder Deckenoberflächen von Innenräumen geeignet ausgebildet ist. Das Gehäuse soll zum einen einen mechanischen Schutz für alle innenliegend angeordneten Komponenten dienen und zum anderen einen möglichst freien und ungehinderten Zugang von Umgebungs- bzw. Raumluft an das von der Schutzfolie separierte Nährmedium ermöglichen.

Zum Zwecke eines vollständig autarken Betriebes der Messvorrichtung ist zusätzlich innerhalb des Gehäuses eine elektrische Energiequelle, beispielsweise in Form eines Akkus oder Batterie vorgesehen. Ebenso ist es möglich, die elektrische Energieversorgung der lösungsgemäßen Messvorrichtung über einen Zugang zum elektrischen Hausnetz zu ermöglichen.

Die auf Basis der Messsignale im Rahmen der Auswerteeinheit gewonnenen Informationen über einen etwaigen Schimmelpilzbefall in der Raumluft sind in einer bevorzugten Ausführungsform drahtlos über ein Endgerät, beispielsweise in Form eines Handys oder externen Monitors vermittels einer am Ort der Messvorrichtung vorgesehenen kabellosen Datenschnittstelle, beispielsweise mittels WLAN oder Bluetooth-Technik, jederzeit abrufbar.

Die Einsatzdauer der Vorrichtung hängt von der Menge bzw. Länge des auf der Reservoir-Spule bevorrateten Trägers sowie dessen zeitlichen Verbrauchs durch Abwickeln und Expositionsdauer des jeweils frisch von der Schutzfolie getrennten Nährmediums im Messbereich ab. So sind Einsatzdauern von mehreren Monaten oder gar Jahren durchaus realisierbar.

Die Messvorrichtung ermöglicht aufgrund ihrer Wartungsfreiheit und dezentralen Anbringung, vorzugsweise an Innenraumwänden oder Decken, eine kostengünstige und dauerhafte Überwachung von Gebäuden und Raumluft auf einen möglichen Schimmelpilzbefall.

In einer alternativen Ausführungsform zur Realisierung der lösungsgemäßen Vorrichtung ist der Träger scheibenförmig ausgebildet. Auf wenigstens einer Träger-Scheibenoberfläche ist das Nährmedium als in Art eines Filmes aufgebracht und gleichsam von einem Schutzfilm, vorzugsweise in Form einer Schutzfolie bedeckt. Der scheibenförmige Träger wird mittels einer einen ansteuerbaren Drehantrieb umfassenden Fördereinrichtung um eine den Scheibenmittelpunkt durchsetzende Drehachse inkrementell, d.h. in zeitlicher Abfolge um vorgebbare Winkelbeträge, gedreht. Bei jeder Drehbewegung sorgt eine Separiereinheit dafür, dass die Schutzfolie in einem vorgebbaren sektoralen Bereich vom Nährmedium getrennt wird, das durch die Drehbewegung in den Messbereich der optischen Messanordnung gelangt bzw. gefördert wird. In Analogie zum vorstehenden Ausführungsbeispiel ist die Förderrichtung in diesem Fall zirkulär um die Drehachse orientiert. Für eine sektorale Ablösung des Schutzfilms ist dieser vorzugsweise kreisring- oder spiralbandförmig ausgebildet ist und überdeckt im nicht abgetrennten Zustand die Oberflächenbereiche des Nährmediums sowie, falls vorhanden, Teile der Träger-Scheibenoberfläche.

Die optische Messanordnung ist relativ zum drehbar, inkrementell antreibbaren, scheibenförmig ausgebildeten Träger innerhalb oder längs eines Kreis- oder Kreisringsektors des Trägers angeordnet und vermag das jeweils frisch von der Schutzfolie freigelegte Nährmedium optisch zu analysieren. Je nach Anordnung des Nährmediums auf der Träger-Scheibenoberfläche ist die optische Messanordnung relativ zum Träger fest oder beweglich angeordnet. Im Falle einer flächig vereinzelten oder gleichverteilten Aufbringung des Nährmediums innerhalb eines kreisringförmigen Flächenbereiches, der vorzugsweise randnah auf der Träger-Scheibenoberfläche angeordnet ist, befindet sich die optische Messanordnung relativ zum drehbar gelagerten Träger an einem randdnahen Bereich. In diesem Fall ist der Schutzfilm ringbandförmig ausgebildet. Die Separiereinheit, die in Förderrichtung vor der optischen Messanordnung angeordnet ist, ist mit einem Ende des ringbandförmigen Schutzfilms verbunden und bspw. als Aufwickelrolle ausgebildet. Bei Drehung des Trägers, dreht sich auch die Aufwickelrolle mit und löst den Schutzfilm lokal vom Nährmedium ab bevor das Nährmedium längs der Förderrichtung in den Messbereich der optischen Messanordnung gefördert wird

Denkbar ist auch eine spiralbandförmige Ausbildung des Schutzfilmes, der bei inkrementeller Drehung des Trägers um die Drehachse von radial Außen nach radial Innen sukzessive mit Hilfe der Separiereinheit von dem auf der Träger-Scheibenoberfläche möglichst großflächig aufgebrachten Nähmedium abgelöst wird. In diesem Fall bietet es sich an, die optische Messanordnung radialbeweglich zur Drehachse auszubilden.

Das mit einer der vorstehend erläuterten Messvorrichtungen durchführbare Messverfahren setzt sich aus wenigstens den nachfolgenden Verfahrensschritten zusammen:
In einem ersten Schritt wird der Träger vermittels der Fördereinheit um eine vorgebbare Wegstrecke derart gefördert, so dass innerhalb eines durch die Messanordnung vorgegebenen Messbereiches ein Abschnitt des Trägers mit dem von der Separiereinheit von der Schutzfolie befreiten Nährmedium für die Umgebungsluft frei zugänglich zu liegen kommt. Im Zustand des ruhenden Trägers wird nachfolgend eine Anzahl optischer Transmissionsmessungen innerhalb des Messbereiches an dem auf dem Träger aufgebrachten und von der Schutzfolie befreiten Nährmedium durchgeführt. Die bei jeder Messung erhaltenen Messsignale werden einer Schimmelpilzbestimmung im Rahmen einer Auswerteeinheit zugrunde gelegt.

Mit Hilfe eines Entscheidungskriteriums wird der Träger vermittels der Fördereinheit um eine vorgegebene Wegstrecke gefördert, so dass einerseits das der Umgebungsluft bereits ausgesetzte und optisch vermessene Nährmedium aus dem Messbereich gelangt und andererseits "frisches" Nährmedium durch Abwickeln von der Reservoir-Spule und Separieren der Schutzfolie vom Nährmedium in den Messbereich überführt wird.

Im Anschluss daran erfolgt in wiederholt gleicher Weise die Durchführung von optischen Transmissionsmessungen und die damit verbundenen Schimmelbestimmungen in der Raumluft.

Die vorstehenden iterativ durchgeführten optischen Messungen an einem jeweils frisch von der Schutzfolie separierten Nährmedium werden so lange wiederholt, bis das Nährmedium auf dem als Meterware auf der Reservoir-Spule oder das auf dem scheibenförmigen Träger aufgebrachte Nährmedium aufgebraucht ist. Die Reservoirspule mit dem darauf vorrätig gewickelten Träger samt Nährmedium und Schutzfolie ist als Austauchmodul ausgebildet und ermöglicht einen schnellen Austausch einer leeren Reservoirspule gegen eine Neue. Ebenso ist auch der scheibenförmige Träger samt dem darauf aufgebrachten Nährmedium und der dieses abdeckenden Schutzfolie als Verbrauchs- und Austauschteil ausführbar.

Die Anzahl der optischen Transmissionsmessungen am Nährboden, der für einen bestimmten, zeitlich vorgegebenen Zeitraum stationär, d.h. bewegungslos im Messbereich gelagert wird und der Umgebungsluft bzw. Raumluft frei zugänglich exponiert ist, wird vorzugsweise in Form von Einzelmessungen, die in einem zeitlich zueinander vorgegebenen Zeitabstand durchgeführt werden, vorgenommen. Verweilt beispielsweise das Nährmedium innerhalb des Messbereiches einen Tag oder eine Woche, so werden die am Nährmedium durchgeführten optischen Messungen mit einem Zeitabstand beispielsweise von einer oder mehreren Stunden durchgeführt. Auch kann der zeitliche Abstand variiert oder bei Feststellung hoher Schimmelpilzkonzentrationen jeweils reduziert werden.

Als Entscheidungskriterium für den zeitlichen Abstand, mit dem jeweils der bandförmige Träger durch die Fördereinheit um eine fest vorgegebene Wegstrecke weiter gefördert wird, dient wenigstens eines der nachfolgenden Kriterien:
a) Erreichen einer vorgegebenen Anzahl von optischen Einzelmessungen am Nährmedium, die jeweils in zeitlichen Abständen vorgenommen werden.
b) Erreichen eines vorgegebenen Transmissionsgrades, der auf der Grundlage der Messsignale ermittelt wird, der der Schimmelbestimmung zugrunde gelegt wird.
c) Erreichen einer vorgegebenen Zeitdauer, während der das von der Schutzfolie befreite Nährmedium im Messbereich der Raumluft ausgesetzt ist.

Die lösungsgemäße Messvorrichtung ermöglicht einen kostengünstigen, schnellen und kontinuierlichen Nachweis von Schimmel in der Umgebungsluft, vor allem in Innenräumen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:
- Fig. 1: schematisierte Darstellung einer lösungsgemäßen Messvorrichtung zur Bestimmung von Schimmel in Raumluft mit einem als Meterware ausgebildeten Träger und
- Fig. 2a, b: schematisierte Darstellung in Teillängsschnitt und Draufsicht einer lösungsgemäßen Messvorrichtung zur Bestimmung von Schimmel in Raumluft mit einem scheibenförmig und inkrementell drehbar ausgebildeten Träger und
- Fig. 3: Visualisierung von Schimmelbildung.

### Wege zur Ausführung der Erfindung, gewerbliche Verwendbarkeit

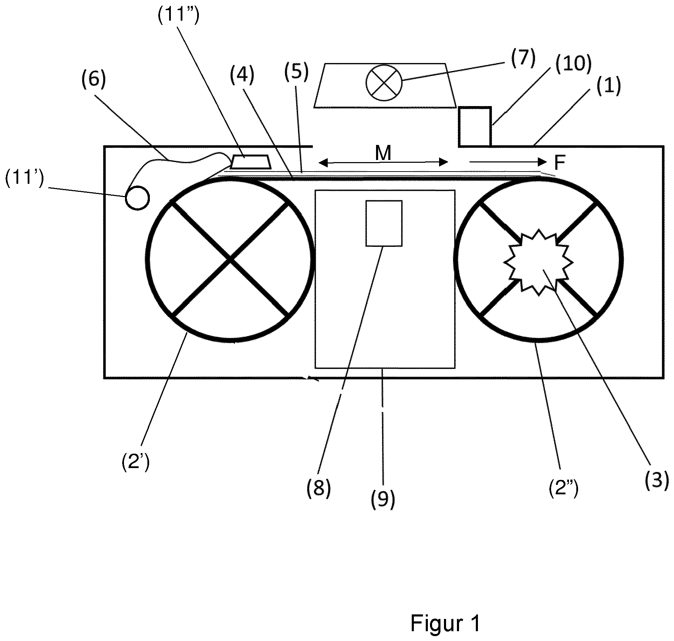

Figur 1 zeigt eine Messvorrichtung zur Bestimmung von Schimmelpilzbefall in Raumluft mit einem Sensorgehäuse 1, in dem eine Reservoir-Spule 2' sowie eine Aufnahmespule 2" um jeweils zwei parallel zueinander angeordnete Drehachsen gelagert sind, von denen die Aufnahmespule 2" durch eine elektromotorische Fördereinheit 3 antreibbar ist. Auf der Reservoir-Spule 2" ist ein bandförmiger, als Meterware ausgebildeter Träger 4 in bevorratender Weise aufgewickelt. Der Träger 4 ist vorzugsweise als lichttransparenter Plastikfilm ausgebildet, auf dessen einen Folienoberseite ein Kultur- bzw. Nährmedium 5 in Art einer Schicht aufgebracht ist. Für das Nährmedium 5 ist grundsätzlich jegliche Art organisches Medium geeignet, das schichtförmig auf dem Träger 4 aufbringbar ist und ein breites Schimmelwachstum fördert. Besonders eignen sich hierfür Agar-basierte Medien, wie beispielsweise Malzextrakt-Agar (MEA oder DG 18). Ebenso eignet sich als Nährmedium eine Zellulose-basierte Mediumschicht, die darüber hinaus eine optische Erscheinung besitzt, die den in Innenräumen vorhandenen Oberflächen, wie beispielsweise Tapeten oder Holz etc., ähnlich ist.

Das auf dem bandförmigen Träger 4 schichtförmig aufgebrachte Nährmedium 5 ist wiederum durch einen Schutzfilm 6, vorzugsweise in Form einer dünnen Folie aus Plastik, die über feuchteundurchlässige Eigenschaften verfügt, abgedeckt.

Durch Drehen beider Spulen 2', 2" in der in Figur 1 angegebenen Förderrichtung F erfolgt eine Abwicklung des Trägers 4 von der Reservoir-Spule 2' in Richtung der Aufnahmespule 2". Mittels einer Separiereinheit 11 wird der Schutzfilm 6 in Förderrichtung F der Reservoir-Spule 2' unmittelbar nachgeordnet von der Oberfläche des Nährmediums 5 getrennt. Die Separiereinheit kann im einfachsten Fall aus einer drehbar gelagerten und kinematisch mit den angetriebenen Spulen 2`, 2" gekoppelten Wickelspule 11' ausgebildet sein. Ebenso kann die Separiereinheit als bloßes mechanisches Trennmittel 11", das klingen- oder kantenförmig ausgebildet ist und unmittelbar am peripheren Ort der Reservoir-Spule 2' zum Abheben der Schutzfolie 6 angeordnet ist, ausgebildet sein. Auch ist eine Kombination aus Wickelspule 11' und Trennmittel 11" denkbar.

Zwischen der Reservoir-Spule 3 und der Aufnahmespule 2" erstreckt sich in Förderrichtung F der Messbereich M, an dem eine optische Messanordnung in Form einer Lichtquelle 7 sowie einem Lichtdetektor 8 angeordnet ist. Die Lichtquelle 7, vorzugsweise in Form einer Weißlicht-LED, befindet sich unmittelbar oberhalb des auf dem Träger 4 aufgebrachten, schichtförmig ausgebildeten Nährmediums 5, das von der Schutzfolie 6 vermittels der Separiereinheit (11', 11") der Umgebungsluft bzw. Raumluft frei zugänglich angeordnet ist. Zur Lichtquelle 7 dem Träger gegenüber liegend angeordnet, ist ein Lichtdetektor 8 vorgesehen, vorzugsweise in Form einer Fotodiode, deren Sensitivität zum Emissionsbereich der Lichtquelle 7 passend gewählt ist. Die in Figur 1 dargestellte optische Messanordnung ist zur Transmissionsmessung durch das Nährmedium geeignet.

Der dargestellte Träger 4 mit dem darauf befindlichen, freigelegten Nährmedium 5 wird von der Lichtquelle 7 in vorgegebenen Zeitabständen durchleuchtet und die Transmission auf der gegenüberliegenden Seite des Trägers vom Lichtdetektor 8 erfasst. Der Lichtdetektor 8 ist mit einer Auswerteeinheit 9 verbunden, in der die Messsignale des Lichtdetektors in geeigneter Weise ausgewertet werden. Der Grad des Vorhandenseins von Schimmelsporen in der Umgebungsluft ist proportional zur Zeit, in der eine anfänglich hohe Transmission des Nährmediums durch Anwachsen von Schimmelsporen abgeschwächt wird. Sobald der Bedeckungsgrad der Oberfläche des der Raumluft ausgesetzten Nährmediums, d.h. der Wert der Transmission, einen vorgegebenen Schwellwert überschreitet, wird ein neuer Abschnitt des Trägers 4 mit dem darauf befindlichen Nährmedium durch Drehen der Spulen 2`, 2" freigesetzt und die Messung kann erneut gestartet werden.

Der Lichtdetektor kann überdies bildgebend ausgebildet sein, so dass es optional möglich ist, unter Verwendung einer geeigneten Bildauswertung Schimmelsporen, die eine ähnliche Größe besitzen, von z.B. Staubpartikeln zu unterscheiden.

Optional sieht die Vorrichtung eine Einheit zur Luftansaugung 10 vor, mit der Umgebungsluft angesaugt und unmittelbar dem Nährmedium 5 im Messbereich M zugeführt wird. Auf diese Weise kann sichergestellt werden, dass sich innerhalb der Messanordnung keine Staueffekte ausbilden, die zu einem verfälschten Messergebnis führen können.

Die illustrierte Messvorrichtung kann in einer kompakten Baugröße realisiert werden, beispielsweise in einem Raummaß von 5 × 3 × 2 cm³.

Zudem ermöglicht die lösungsgemäße Vorrichtung einen autarken Messbetrieb, durch Vorsehen einer elektrischen Energiequelle innerhalb des Gehäuses 1 beispielsweise in Form eines Akkus oder einer Batterie. Ferner sollte in diesem Fall eine drahtlose Kommunikationseinheit im Gehäuse vorgesehen sein, durch die die ermittelten Informationen über einen möglichen Schimmelbefall an ein externes Endgerät, beispielsweise in Form eines Smartphones oder stationären Anzeigeeinheit übertragbar sind. Alternativ oder in Kombination kann am Gehäuse 1 ein entsprechendes Signalmittel angebracht sein, durch das die Information über einen möglichen Schimmelbefall in der umgebenden Raumluft direkt angezeigt werden kann, beispielsweise in Form einer farbcodierten Ampelanzeige.

Durch die kompakte Ausgestaltungsmöglichkeit der Messvorrichtung ist deren Anbringung an beliebigen Orten in einem zu überwachenden Innenraum problemlos möglich. Auf diese Weise kann auch nicht fachkundiges Personal die Messvorrichtung als kostengünstigen Schnelltest bzw. Indikator für Schimmelbefall einsetzen, vergleichbar dem Einsatz von Rauchmeldern in Gebäuden.

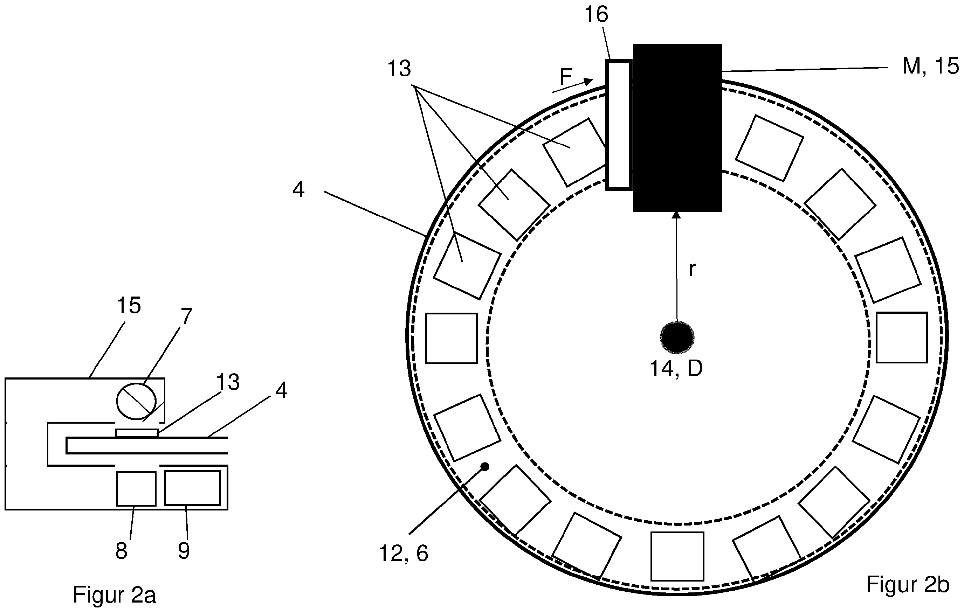

Figuren 2 a, b zeigen eine alternative Ausgestaltung der lösungsgemäßen Vorrichtung in einem Teillängsschnitt a) und Draufsicht b). Auf einem scheibenförmigen Träger 4, der vorzugsweise aus lichttransparentem Material besteht, befinden sich längs eines Kreisring-förmigen Flächenbereiches 12 mehrere mit Nährmedium beschichtete Messfelder 13, die durch einen Motor 14 in den Messbereich M der optischen Messanordnung 15 um die Drehachse D rotiert werden können. In der optischen Messanordnung 15 befinden sich die Lichtquelle 7, gegenüberliegend der Lichtdetektor 8 sowie die Steuer- und Auswerteelektronik 9. Sämtliche Messfelder 13 sind in einem Ausgangsstadium mit einer Kreisringband-förmigen Schutzfolie 6 abgedeckt, die in Förderrichtung F des Trägers 4 von einer Separiereinheit 16 von der Oberfläche des Nährmediums und des Trägers 4 lokal abgehoben wird. Vorzugsweise ist die Separiereinheit 16 als Aufwickelspule ausgebildet, an der ein Ende der Kreisringband-förmigen Schutzfolie 6 befestigt ist und auf die infolge der inkrementellen Drehung des Trägers 4 die Schutzfolie aufgewickelt wird.

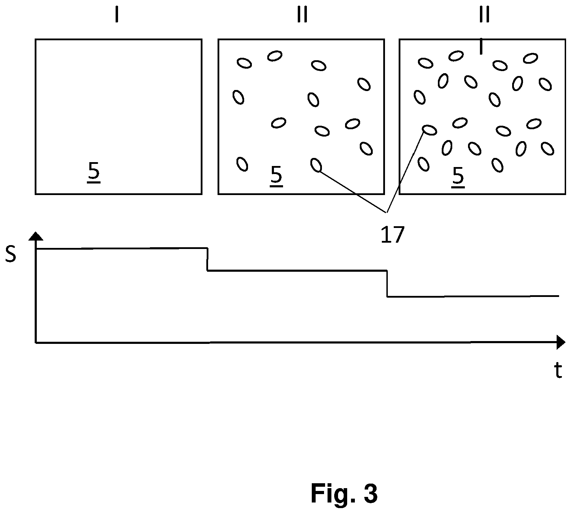

Um die Anzahl der auf der Träger-Scheibenoberfläche aufbringbaren Messfelder 13 zu erhöhen, bietet es sich an die Messfelder 13 abweichend zur Anordnung in Figur 3 a, b, längs einer Spiralbahn anzuordnen, die mit einer entsprechenden spiralbahnförmigen Schutzfolie bedeckt sind. Da bei inkrementeller Drehung des Trägers 4 um die Drehachse D der radiale Abstand r der jeweils zu vermessenden Messfelder 13 abnimmt, ist die optische Messanordnung 15 entsprechend radial r beweglich anzuordnen.

Figur 3 illustriert verschiedene Stadien (I, II, III) von Schimmelwachstums auf dem Nährmedium 5 in einer Draufsichtdarstellung, siehe obere Bilddarstellung. Im Stadium I ist der Beginn der Messung gezeigt, an dem kein Schimmelwachstum auf dem Nährmedium 5 vorhanden ist. Nach einer kurzen Zeit der Exposition setzt, Schimmelwachstum 17, siehe Stadium II. Nach einer längeren Zeit der Exposition, zeigt sich vermehrtes Schimmelwachstum 17, siehe Stadium III.

Im unteren Bildabschnitt der Figur 3 ist der Zeitverlauf eines Messsignals S am Lichtdetektor für den Fall einer Transmissionsmessung in Diagrammdarstellung gezeigt. Zu Beginn der Messung (I) ist das Signal am größten und schwächt sich aufgrund der geringeren Lichtdurchlässigkeit des Nährmediums/Schimmels mit dessen fortschreitendem Wachstum (II) bzw. (III) sukzessive ab.

### Bezugszeichenliste

- 1: Gehäuse
- 2`: Reservoir-Spule
- 2": Aufnahmespule
- 3: Fördereinheit, Elektromotor
- 4: Träger
- 5: Nährmedium
- 6: Schutzfolie
- 7: Lichtquelle
- 8: Lichtdetektor
- 9: Auswerteeinheit
- 10: Einheit zur Luftansaugung
- 11': Wickelspule
- 11": Mechanische Separiereinheit
- 12: Kreisring-förmiger Flächenbereich
- 13: Messfeld
- 14: Motor
- 15: optische Messanordnung
- 16: Separiereinheit
- 17: Schimmelbefall
- M: Messbereich
- F: Förderrichtung

## Patentansprüche

1. Vorrichtung zum Nachweis von Schimmel in Raumluft mit einem Träger (4), der eine für die Raumluft zugängliche Trägeroberfläche besitzt, auf der wenigstens ein das Wachstum von Schimmel begünstigendes Nährmedium (5) in Art eines Filmes aufgebracht ist, einer Messanordnung (15) mit wenigstens einer Lichtquelle (7) und wenigstens einem Lichtdetektor (8) zur Transmissionsmessung an dem oder durch das auf der Trägeroberfläche aufgebrachten Nährmedium (5) sowie einer mit dem Lichtdetektor (8) verbundenen Auswerteinheit (9), die unter Zugrundelegung eines vom Lichtdetektor herrührenden Sensorsignals sowie eines Entscheidungskriteriums ein Signals erzeugt, so dass der Träger vermittels der Fördereinheit um eine vorgegebene Wegstrecke gefördert wird,
**dadurch gekennzeichnet, dass** zumindest auf dem, in Art eines Filmes auf dem Träger (4) aufgebrachten Nährmedium (5) ein Schutzfilm (6) in Art einer Folie aufgebracht ist,
dass eine Fördereinheit (3) vorgesehen ist, die den Träger (4) längs einer Förderstrecke zu fördern vermag, längs der die Messanordnung (15) angebracht ist, dass eine Separiereinheit (16) vorgesehen ist, die in Förderrichtung (F) vor der Messanordnung (15) die Schutzfolie (6) vom Nährmedium (5) separiert,
dass der Träger (4) aus einem lichttransparenten Trägermaterial gefertigt ist, und
dass die wenigstens eine Lichtquelle (7) sowie der wenigstens eine Lichtdetektor (8) gegenüberliegend zum Träger (4) angeordnet sind.

2. Vorrichtung nach Anspruch 1,
**dadurch gekennzeichnet, dass** der Träger (4) samt Nährmedium (5) und Schutzfilm (6) bandförmig als Meterware ausgebildet ist.

3. Vorrichtung nach Anspruch 2,
**dadurch gekennzeichnet, dass** der bandförmige Träger (4) spiralförmig auf einer Reservoirspule (2') gewickelt und mit einer Aufnahmespule (2") verbunden ist, und dass längs der sich zwischen der Reservoir- und Aufnahmespule (2', 2") erstreckende Förderstrecke die Messanordnung (15) angeordnet ist.

4. Vorrichtung nach einem der Ansprüche 1 bis 3,
**dadurch gekennzeichnet, dass** die Separiereinheit (16) als Wickelspule (11') ausgebildet ist, die mit der Schutzfolie (6) zu deren Aufwicklung um die Wickelspule (11') verbunden ist.

5. Vorrichtung nach den Ansprüchen 3 oder 4,
**dadurch gekennzeichnet, dass** wenigstens der auf der Reservoirspule (2') gewickelte und mit der Aufnahmespule (2") verbundene Träger (4) samt Nährmedium (5) und Schutzfolie (6), die Fördereinheit (3), die Messanordnung (15), die Auswerteeinheit (9) sowie die Separiereinheit (16) von einem Gehäuse (1) umgeben sind.

6. Vorrichtung nach Anspruch 1,
**dadurch gekennzeichnet, dass** der Träger (4) scheibenförmig ausgebildet, auf dessen Trägeroberfläche das Nährmedium (5) und der das Nährmedium (5) bedeckende Schutzfilm (6) aufgebracht sind.

7. Vorrichtung nach Anspruch 6,
**dadurch gekennzeichnet, dass** der Schutzfilm (6) kreisring- oder spiralbandförmig ausgebildet ist.

8. Vorrichtung nach Anspruch 6 oder 7,
**dadurch gekennzeichnet, dass** die Fördereinrichtung (3) einen ansteuerbaren Drehantrieb umfasst, der den scheibenförmigen Träger (4) um eine dem scheibenförmigen Träger (4) zugeordnete Drehachse inkrementell dreht.

9. Vorrichtung nach Anspruch 7 oder 8,
**dadurch gekennzeichnet, dass** die Separiereinheit (16) den kreisring- oder spiralbandförmigen Schutzfilm (6) durch inkrementelle Drehung des Trägers (4) von dem Nährmedium (5) separiert.

10. Vorrichtung nach einem der Ansprüche 1 bis 9,
**dadurch gekennzeichnet, dass** eine Steuereinheit vorgesehen ist, die mit der Fördereinheit (3) und der Messanordnung (16) verbunden ist.

11. Vorrichtung nach einem der Ansprüche 1 bis 10,
**dadurch gekennzeichnet, dass** im Bereich der Förderstrecke eine Einheit zur Luftansaugung (10) angeordnet ist, die Umgebungsluft auf das von der Schutzfolie (6) separierte Nährmedium (5) richtet.

12. Vorrichtung nach einem der Ansprüche 1 bis 11,
**dadurch gekennzeichnet, dass** die wenigstens eine Lichtquelle (7) und der wenigstens eine Lichtdetektor (8) zur Anregung und Erfassung von Fluoreszenzlicht am auf dem Nährmedium (5) anhaftenden Schimmel ausgebildet und angeordnet sind.

13. Verfahren zum Nachweis von Schimmel in Raumluft unter Verwendung der Vorrichtung nach einem der Ansprüche 1 bis 12,
**gekennzeichnet durch** folgende Verfahrensschritte:
a) der Träger (4) wird vermittels der Fördereinheit (3) um eine vorgebbare Wegstrecke gefördert während die Schutzfolie (6) mittels der Separiereinheit (16) vom Nährmedium (5) derart separiert wird, so dass innerhalb eines durch die Messanordnung (15) vorgegebenen Messbereiches (M) ein Abschnitt des Trägers (4) mit dem von der Separiereinheit (16) von der Schutzfolie (6) befreiten Nährmedium (5) zu liegen kommt,
b) eine Anzahl optischer Transmissionsmessungen wird innerhalb des Messbereiches (M) an dem auf dem Träger (4) aufgebrachten und von der Schutzfolie (6) befreiten Nährmedium (5) durchgeführt, während der Träger (4) ruht,
c) bei jeder Messung erhaltene Messsignale werden einer Schimmelbestimmung zugrunde gelegt,
d) unter Zugrundelegung eines Entscheidungskriteriums wird der Träger (4) vermittels der Fördereinheit (3) wie im Schritt a) um die vorgegebene Wegstrecke gefördert und anschließend werden die Schritte b) und c) durchgeführt, und
e) der Schritt d) wird solange wiederholt, bis das auf dem Träger (4) bevorratete Nährmedium (5) aufgebraucht ist.

14. Verfahren nach Anspruch 13,
**dadurch gekennzeichnet, dass** die Anzahl der optischen Transmissionsmessungen jeweils in Form von einzelnen Messungen, die in einem zeitlich vorgebbaren Zeitabstand zueinander durchgeführt werden, vorgenommen wird.

15. Verfahren nach Anspruch 13 oder 14,
**dadurch gekennzeichnet, dass** als Entscheidungskriterium wenigstens eines der nachfolgenden Kriterien verwendet wird:
- Erreichen der vorgegebenen Anzahl an Messungen,
- Erreichen eines vorgegebenen Transmissionsgrades, der auf der Grundlage der Messsignale ermittelt wird, der der Schimmelbestimmung zugrunde gelegt wird,
- Erreichen einer vorgegebenen Zeitdauer, während der das von der Schutzfolie (6) befreite Nährmedium (5) im Messbereich (M) der Raumluft ausgesetzt ist.

## Claims

1. A device for detecting mould in ambient air, with a support (4) which has a support surface which can be accessed by the ambient air on which at least one nutrient medium (5) which favours the growth of mould has been applied in the manner of a film, a measuring assembly (15) with at least one light source (7) and at least one light detector (8) for measuring the transmission at or through the nutrient medium (5) applied to the support surface, as well as an evaluation unit (9) connected to the light detector (8) which generates a signal on the basis of a sensor signal originating from the light detector as well as on a decision criterion, so that the support is conveyed over a specified distance by means of the conveying unit, **characterized in that** a protective film (6) is applied in the manner of a film to at least the nutrient medium (5) which has been applied to the support (4) in the manner of a film,
**in that** a conveying unit (3) is provided which is capable of conveying the support (4) along a conveying path alongside which the measuring assembly (5) has been mounted,
**in that** a separating unit (16) is provided which separates the protective film (6) from the nutrient medium (5) in front of the measuring assembly (15) in the conveying direction (F),
**in that** the support (4) is prepared from a support material which is transparent to light, and **in that** the at least one light source (7) as well as the at least one light detector (8) are disposed on opposite sides of the support (4).

2. The device as claimed in claim 1,
**characterized in that** the support (4), together with the nutrient medium (5) and protective film (6), is configured in the form of a strip which is sold by the metre.

3. The device as claimed in claim 2,
**characterized in that** the support (4) in the form of a strip is helically wound on a reserve spool (2') and is connected to a take-up spool (2"), and **in that** the measuring assembly (15) is disposed alongside the conveying path extending between the reserve spool and the take-up spool (2', 2").

4. The device as claimed in one of claims 1 to 3,
**characterized in that** the separating unit (16) is configured as a winding spool (11') which is connected to the protective film (6) in order to wind it round the winding spool (11').

5. The device as claimed in claim 3 or claim 4,
**characterized in that** at least the support (4) together with the nutrient medium (5) and protective film (6) wound on the reserve spool (2') and connected to the take-up spool (2"), the conveying unit (3), the measuring assembly (15), the evaluation unit (9) as well as the separating unit (16) are surrounded by a housing (1).

6. The device as claimed in claim 1,
**characterized in that** the support (4) is disk-shaped in configuration, on the support surface of which the nutrient medium (5) and the protective film (6) covering the nutrient medium (5) have been applied.

7. The device as claimed in claim 6,
**characterized in that** the protective film (6) is in the shape of a ring or in the shape of a helical strip.

8. The device as claimed in claim 6 or claim 7,
**characterized in that** the conveying unit (3) comprises a controllable rotary drive which rotates the disk-shaped support (4) in increments about an axis of rotation associated with the disk-shaped support (4).

9. The device as claimed in claim 7 or claim 8,
**characterized in that** the separating unit (16) separates the ring-shaped or helical strip-shaped protective film (6) from the nutrient medium (5) by incremental rotation of the support (4).

10. The device as claimed in one of claims 1 to 9,
**characterized in that** a control unit is provided which is connected to the conveying unit (3) and the measuring assembly (16).

11. The device as claimed in one of claims 1 to 10,
**characterized in that** an air intake unit (10) which directs ambient air onto the nutrient medium (5) which has been separated from the protective film (6) is disposed in the region of the conveying path.

12. The device as claimed in one of claims 1 to 11,
**characterized in that** the at least one light source (7) and the at least one light detector (8) are constructed and disposed to excite and detect fluorescent light on mould adhering to the nutrient medium (5).

13. A method for detecting mould in ambient air using the device as claimed in one of claims 1 to 12,
**characterized by** the following steps of the method:
a) the support (4) is conveyed by means of the conveying unit (3) over a predeterminable distance while the protective film (6) is separated from the nutrient medium (5) by means of the separating unit (16) in a manner such that a section of the support (4) with the nutrient medium (5) which has been separated from the protective film (6) by the separating unit (16) becomes positioned inside a measuring zone (M) specified by the measuring assembly (15),
b) a number of optical transmission measurements are carried out inside the measuring zone (M) on the nutrient medium (5) applied to the support (4) and released from the protective film (6) while the support (4) is stationary,
c) measurement signals obtained for each measurement form the basis of a mould determination,
d) on the basis of a decision criterion, the support (4) is conveyed by means of the conveying unit (3) over the distance specified in step a), and next, steps b) and c) are carried out, and
e) step d) is repeated until the nutrient medium (5) stored on the support (4) is exhausted.

14. The method as claimed in claim 13,
**characterized in that** each of the number of optical transmission measurements is made in the form of individual measurements which are carried out at intervals of time with respect to each other which can be specified.

15. The method as claimed in claim 13 or claim 14,
**characterized in that** at least one of the following criteria is used as the decision criterion:
- reaching the specified number of measurements,
- reaching a specified transmittance which is determined on the basis of the measurement signals on which the mould determination is based,
- reaching a specified period of time during which the nutrient medium (5) which has been released from the protective film (6) is exposed to ambient air in the measuring zone (M).

## Revendications

1. Dispositif, destiné à détecter la présence de moisissures dans de l'air ambiant, pourvu d'un support (4), qui possède une surface de support accessible à l'air ambiant, sur laquelle au moins un milieu de culture (5) favorisant la croissance des moisissures est appliqué à la manière d'un film, d'un agencement de mesure (15) doté d'au moins une source lumineuse (7) et d'au moins un détecteur de lumière (8), pour la mesure de transmission sur le ou via le milieu de culture (5) appliqué sur la surface de support, ainsi que d'une unité d'évaluation (9) reliée avec le détecteur de lumière (8), qui sur le fondement d'un signal de capteur provenant du détecteur de lumière, ainsi que d'un critère décisionnel génère un signal, de telle sorte que le support soit convoyé au moyen de l'unité de convoyage de la valeur d'un trajet prédéfini,
**caractérisé en ce qu'**au moins sur le milieu de culture (5) appliqué à la manière d'un film sur le support (4), un film protecteur (6) est appliqué à la manière d'un transparent,
**en ce qu'**il est prévu une unité de convoyage (3) susceptible de convoyer le support (4) le long d'un trajet de convoyage, le long duquel est monté l'agencement de mesure (15),
**en ce qu'**il est prévu une unité de séparation (16), qui dans la direction de convoyage (F) sépare à l'avant de l'agencement de mesure (15) le film protecteur (6) du milieu de culture (5),
**en ce que** le support (4) est fabriqué en une matière de support transparente à la lumière et **en ce que** l'au moins une source lumineuse (7), ainsi que l'au moins un détecteur de lumière (8) sont placés au vis-à-vis du support (4).

2. Dispositif selon la revendication 1,
**caractérisé en ce que** le support (4) avec le milieu de culture (5) et le film protecteur (6) est conçu sous la forme d'une bande, en tant que produit au mètre.

3. Dispositif selon la revendication 2,
**caractérisé en ce que** le support (4) en forme de bande est enroulé en spirale sur une bobine de réserve (2') et est relié avec une bobine réceptrice (2") et
**en ce que** le long du trajet de convoyage qui s'étend entre la bobine de réserve et la bobine réceptrice (2', 2") est placé l'agencement de mesure (15).

4. Dispositif selon l'une quelconque des revendications 1 à 3,
**caractérisé en ce que** l'unité de séparation (16) est conçue sous la forme d'une bobine d'enroulement (11') qui est reliée avec le film protecteur (6), pour son enroulement autour de la bobine d'enroulement (11').

5. Dispositif selon les revendications 3 ou 4,
**caractérisé en ce qu'**au moins le support (4) enroulé sur la bobine de réserve (2') et relié avec la bobine réceptrice (2") avec le milieu de culture (5) et le film protecteur (6), l'unité de convoyage (3), l'agencement de mesure (15), l'unité d'évaluation (9) ainsi que l'unité de séparation (16) sont entourés par un boîtier (1).

6. Dispositif selon la revendication 1,
**caractérisé en ce que** le support (4) est conçu en forme de disque, sur la surface de support duquel sont appliqués le milieu de culture (5) et le film protecteur (6) recouvrant le milieu de culture (5).

7. Dispositif selon la revendication 6,
**caractérisé en ce que** le film protecteur (6) est conçu en forme d'anneau circulaire ou de bande en spirale.

8. Dispositif selon la revendication 6 ou 7,
**caractérisé en ce que** le dispositif de convoyage (3) comprend un entraînement en rotation, susceptible d'être commandé qui fait tourner de manière incrémentielle le support (4) en forme de disque autour d'un axe de rotation associé au support (4) en forme de disque.

9. Dispositif selon la revendication 7 ou 8,
**caractérisé en ce que** l'unité de séparation (16) sépare du milieu de culture (5) le film protecteur (6) en forme d'anneau circulaire ou de bande en spirale par une rotation incrémentielle du support (4).

10. Dispositif selon l'une quelconque des revendications 1 à 9,
**caractérisé en ce qu'**il est prévu une unité de commande qui est reliée avec l'unité de convoyage (3) et l'agencement de mesure (16).

11. Dispositif selon l'une quelconque des revendications 1 à 10,
**caractérisé en ce que** dans la zone du trajet de convoyage est placée une unité d'aspiration d'air (10), qui dirige de l'air ambiant sur le milieu de culture (5) séparé du film protecteur (6).

12. Dispositif selon l'une quelconque des revendications 1 à 11,
**caractérisé en ce que** l'au moins une source lumineuse (7) et l'au moins un détecteur de lumière (8) sont conçus et placés pour exciter et détecter de la lumière fluorescente sur les moisissures qui adhèrent sur le milieu de culture (5).

13. Procédé, destiné à détecter la présence de moisissures dans de l'air ambiant en utilisant le dispositif selon l'une quelconque des revendications 1 à 12,
**caractérisé par** les étapes de procédé suivantes :
a) l'on convoie le support (4) au moyen de l'unité de convoyage (3) de la valeur d'un trajet prédéfinissable, pendant que le film protecteur (6) est séparé du milieu de culture (5) au moyen de l'unité de séparation (16), de telle sorte qu'à l'intérieur d'une zone de mesure (M) prédéfinie par l'agencement de mesure (15), une section prédéfinie du support (4) vienne se situer sur le milieu de culture (5) libéré du film protecteur (6) par l'unité de séparation (16),
b) l'on procède à un nombre de mesures de transmission optiques à l'intérieur de la zone de mesure (M) sur le milieu de culture (5) appliqué sur le support (4) et libéré du film protecteur (6), pendant que le support (4) est au repos,
c) des signaux de mesure obtenus lors de chaque mesure servent de fondement pour déterminer la présence de moisissures,
d) en se fondant sur un critère support décisionnel, le support (4) est convoyé au moyen de l'unité de convoyage (3) comme à l'étape a) de la valeur du trajet prédéfini, puis l'on procède aux étapes b) et c) et
e) l'on répète l'étape d) jusqu'à ce que le milieu de culture (5) stocké sur le support (4) soit épuisé.

14. Procédé selon la revendication 13,
**caractérisé en ce que** l'on procède au nombre de mesures de transmission optique chaque fois sous la forme de mesures individuelles, que l'on réalise dans un intervalle de temps prédéfinissable dans le temps.

15. Procédé selon la revendication 13 ou 14,
**caractérisé en ce que** l'on utilise en tant que critère décisionnel au moins l'un des critères suivants :
- l'atteinte du nombre prédéfini de mesures,
- l'atteinte d'un niveau de transmission prédéfini, qui est déterminé sur la base des signaux de mesure qui sert de fondement pour la détermination de la présence de moisissures,
- l'atteinte d'une durée prédéfinie, pendant laquelle le milieu de culture (5) libéré du film protecteur (6) est exposé à l'air ambiant dans la zone de mesure (M).
